# EUROPÄISCHE PATENTSCHRIFT

(11) **EP 1 875 173 B1**
(45) Veröffentlichungstag und Bekanntmachung des Hinweises auf die Patenterteilung: **11.05.2011**
(21) Anmeldenummer: 06722714.0
(22) Anmeldetag: 30.03.2006
(51) Int. Cl.: G01D 5/20

(54) **ANORDNUNG EINES WIRBELSTROMSENSORS UND EINES MESSOBJEKTS SOWIE VERFAHREN**
ARRANGEMENT OF AN EDDY CURRENT SENSOR AND A TEST OBJECT AND METHOD
ARRANGEMENT D'UN CAPTEUR DE COURANT DE FOUCAULT ET UN OBJET A MESURER ET PROCEDE

(30) Priorität: 27.04.2005 DE 102005020007; 26.10.2005 DE 102005051536
(43) Veröffentlichungstag der Anmeldung: 09.01.2008
(73) Patentinhaber: Micro-Epsilon Messtechnik GmbH & Co. KG, 94496 Ortenburg (DE)
(72) Erfinder: HRUBES, Franz, 94086 Bad Griesbach (DE); SCHALLMOSER, Günter, 94099 Ruhstorf (DE)
(74) Vertreter: Naumann, Ulrich
(86) Internationale Anmeldenummer: PCT/DE2006/000562
(87) Internationale Veröffentlichungsnummer: WO 2006/114072

(56) Entgegenhaltungen:
- US-A- 5 017 869
- US-A- 5 559 428
- US-A1- 2004 032 256
- US-A1- 2004 138 838

## Beschreibung

Die vorliegende Erfindung betrifft eine Anordnung eines mindestens eine Sensorspule umfassenden, berührungslos arbeitenden Wirbelstromsensors und eines im Wesentlichen flächigen, eine Kante aufweisenden Messobjekts. Des Weiteren betrifft die Erfindung ein Verfahren zur Detektion schmaler flächiger Messobjekte mittels eines Wirbelstromsensors, unter Anwendung der erfindungsgemäßen Anordnung.

In vielen Bereichen der Technik ist es notwendig, genauere Informationen über einen Bewegungsvorgang zu besitzen. Insbesondere bei automatisierten, gesteuerten oder geregelten System lassen diese Daten erst einen sicheren und effizienten Betrieb zu. Ein derartiges System ist beispielsweise ein Turbolader in einem Kraftfahrzeug. Durch Kenntnis der genauen Drehbewegung des Verdichterrades kann nicht nur die Drehzahl des Turboladers überwacht und entsprechend den vorgegebenen Sollwerten geregelt, sondern auch eine Optimierung des Wirkungsgrades des gesamten Motors herbeigeführt werden. Zur möglichst genauen Abbildung der Drehbewegung werden die einzelnen Schaufeln des Verdichterrades detektiert. Dabei kommen In der Praxis häufig Wirbelstromsensoren zum Einsatz.

Schaufeln eines Verdichterrades von Turboladern bestehen normalerweise vorwiegend aus Aluminium oder insbesondere bei Nutzfahrzeugen aus Titan. Diese Schaufeln sind sehr dünn und weisen beispielsweise bei Titanschaufeln meist nur eine Dicke von etwa 0,5 bis 0,7 mm auf. Bedingt durch Fertigungstoleranzen muss bei einer Detektion der Schaufeln mit einem Wirbelstromsensor ein Detektionsabstand von etwa 2 mm eingehalten werden. Dieser ist bei standardmäßigen Wirbelstromsensoren nur mit entsprechend großen Spulendurchmessern erreichbar.

Bei der aus der Praxis bekannten Messvorrichtung ist die Spule derart angeordnet, dass die Spulenachse senkrecht zur Bewegungsrichtung des Schaufelrades orientiert Ist. Dadurch können relativ hohe Signalflanken erreicht werden. Allerdings tritt bei sehr schmalen Schaufeln ein unerwünschter Effekt auf, der die Signalauswertung erheblich erschwert. Wenn eine Schaufel an dem Sensor vorbeibewegt wird, ergibt sich eine Impedanzänderung, deren Signalverlauf die Form eines Doppelhöckers aufweist. Dabei ist der Signaleinbruch dann am größten, wenn die Schaufel mittig über dem Sensor positioniert ist. Dieser Einbruch ist stark von der Schaufeldicke - je dünner umso stärker - und von der elektrischen Leitfähigkeit des Schaufelmaterials - je geringer die Leitfähigkeit desto stärker der Einbruch - abhängig.

Zur Durchführung einer eindeutigen Detektion wird deshalb eine Signalauswertung durchgeführt. Da jedoch bei den höchsten Drehzahlen Signalfrequenzen bis etwa 1 MHz zu verarbeiten sind, erhöhen sich die Kosten für die Auswerteelektronik erheblich. Dies ist insbesondere bei einem Serieneinsatz zu teuer.

Aus der US 2004/138838 A1 ist ein berührungslos arbeitender Wirbelstromsensor bekannt, der im Konkreten zur Ermittlung der Dicke einer elektrisch leitfähigen Schicht auf der Oberfläche eines Substrats dient. Dabei ist wesentlich, dass eine Bewegung des Sensors parallel zur Oberfläche der elektrisch leitfähigen Schicht oder umgekehrt stattfindet. Um die Dicke der elektrisch leitfähigen Schicht zuverlässig und reproduzierbar bestimmen zu können, ist es zwingend erforderlich, dass der Abstand zwischen dem Sensor und der leitfähigen Schicht bzw. dem die leitfähige Schicht tragenden Substrat (unter der Schicht) weitgehend konstant gehalten wird.

Der vorliegenden Erfindung liegt die Aufgabe zugrunde, eine Anordnung der eingangs genannten Art und ein entsprechendes Verfahren, unter Anwendung der Anordnung, anzugeben, wonach es möglich ist, flächige Messobjekte auf einfache und kostengünstige Weise sicher zu detektieren.

Erfindungsgemäß ist die voranstehende Aufgabe durch die Merkmale der nebengeordneten Patentansprüche 1 und 7 gelöst. Danach umfasst die erfindungsgemäße Anordnung einen mindestens eine Sensorspule umfassenden, berührungslos arbeitenden Wirbelstromsensor und ein im Wesentlichen flächiges, eine Kante aufweisendes Messobjekt. Die Sensorspule und das Messobjekt sind derart zueinander positioniert, dass die Spulenachse im Wesentlichen parallel zur Flächennormalen des Messobjekts liegt und zur Detektion des Messobjekts die Sensorspule an der Kante des Messobjekts oder umgekehrt derart vorbeigeführt wird, dass die Sensorspule beim Passieren derart ausgerichtet Ist, dass die Spulenachse Im Wesentlichen parallel zur Flächennormalen des Messobjekts orientiert ist, so dass in dem MessobJekt lediglich in Folge des Streufeldes der Sensorspulewirbelströme induziert werden.

In verfahrensmäßiger Hinsicht ist die voranstehende Aufgabe durch die Merkmale des nebengeordneten Patentanspruchs 7 gelöst, nämlich durch ein Verfahren zur Detektion schmaler flächiger Messobjekte mittels eines Wirbelstromsensors unter Anwendung einer erfindungsgemäßen Anordnung, wobei die Sensorspule gegenüber dem Messobjekt derart angeordnet und an der Kante des Messobjekts vorbeibewegt wird, oder umgekehrt, so dass beim Passieren nur einmal ein Wirbelstrom im Messobjekt auftreten kann.

Es ist zunächst erkannt worden, dass durch geschickte Orientierung der Sensorspule auf verblüffend einfache Art und Weise das Sensorsignal derart vereinfacht werden kann, dass auf eine aufwendige Signalverarbeitung verzichtet werden kann. Eine Verbesserung der Signalverarbeitung ist damit nicht notwendig. Vielmehr kann die Signalauswertung durch die Erfindung erheblich reduziert und vereinfacht werden. Gegenüber der aus der Praxis bekannten Position ist die Sensorspule um 90° gekippt, so dass die Spulenachse beim Passieren des Messobjekts oder umgekehrt im Wesentlichen parallel zur Flächennormalen des Messobjekts orientiert ist. Da das Messobjekt im Wesentlichen parallel zur Spulenachse an der Sensorspule oder entsprechend die Sensorspule am Messobjekt vorbeiführbar ausgestaltet ist, ergibt sich bei einer Messung der Impedanz ein Signalverlauf, der lediglich einen Höcker pro Schaufelrad aufweist. Damit tritt kein Doppelhöcker mehr auf und die Signalauswertung vereinfacht sich erheblich.

Bei den aus der Praxis bekannten Wirbelstromsensoren wird die Sensorspule mit einem Wechselstrom beaufschlagt, der ein durch die Sensorspule abgestrahltes elektromagnetisches Feld hervorruft. Die Sensorspule weist dabei eine charakteristische Impedanz auf, die sich in Abhängigkeit von elektrisch leitfähigen Materialien im Feldbereich der Spule erhöht. Nähert sich ein elektrisch leitfähiges Objekt der Sensorspule, so werden durch das elektromagnetische Feld Wirbelströme im Bereich der Oberfläche des elektrisch leitfähigen Objekts erzeugt. Diese Wirbelströme wirken auf die Sensorspule derart zurück, dass sich die Impedanz der Sensorspule erhöht. Die Erhöhung ist umso höher, je besser sich die Wirbelströme in dem elektrisch leitfähigen Objekt ausbreiten können. Große der Sensorspule zugewandte Flächen erzeugen dabei eine besonders große Impedanzerhöhung. Sollen allerdings flächige und Insbesondere schmale Messobjekte detektlert werden, so können sich in der der Stirnseite der Spule zugewandten schmalen Seite des Messobjekts nur in geringem Ausmaß Wirbelströme ausbilden.

Beim Passieren des Messobjekts werden in den zur Spulenachse parallelen Seitenflächen durch das Streufeld Wirbelströme induziert, die ebenso zu einer Erhöhung der Impedanz führen. Dadurch entsteht das charakteristische höckerförmige Profil, wobei die Impedanzerhöhung dann minimal wird, wenn das Messobjekt mittig auf der Spulenachse zum Liegen kommt. In dieser Position sind keine Wirbelströme durch Streufelder der Spule in den Seitenflächen des Messobjekts möglich, es wirken lediglich die in der schmalen Seite des Messobjekts induzierten Wirbelströme.

Durch das erfindungsgemäße Drehen der Sensorspule aus der aus der Praxis bekannten Position wird die Höckerbildung wirkungsvoll vermieden. Liegt die Spulenachse im Wesentlichen parallel zur Flächennormalen des Messobjekts, so werden in dem Messobjekt lediglich in Folge des Streufeldes der Sensorspule Wirbelströme in dem Messobjekt induziert. Der Einbruch des Messsignals infolge der fehlenden Wirkung des Streufeldes wird damit effektiv vermieden. Dadurch kann durch die eindeutige Signalform eine wesentlich einfachere Signalverarbeitung durchgeführt werden und es lassen sich dennoch gute Messergebnisse erzielen. Durch eine optimierte Ausgestaltung der Spule lassen sich die Messergebnisse noch weiter verbessern. So kann durch eine ovale oder rechteckige Sensorspule der Detektionsabstand vergrößert werden oder der erforderliche Sensordurchmesser verringert werden. Dabei wird ausgenutzt, dass sich über eine längere Strecke als bei einer runden Spule die aktiv wirkende Spulenseite nahe am Messobjekt befindet und somit die Wirkung entsprechend größer ist.

Durch Drehen der Spule erhöht sich bei dem erfindungsgemäßen Wirbelstromsensor bei gleich bleibenden Spulenabmessungen der erreichbare Detektionsabstand. Entsprechende Tests haben zudem ergeben, dass das Messsignal auch bei Winkelabweichung von bis zu 20° gegenüber der optimalen Parallelanordnung kaum geringer wird. Dabei ist der erfindungsgemäße Wirbelstromsensor und das erfindungsgemäße Verfahren gerade bei extrem schmalen Messobjekten, bei denen die schmale Seite des Messobjekts beim Passieren der Sensorspule im Wesentlichen dem Sensor zugewandt ist, besonders gut einsetzbar. Insbesondere können die Messobjekte beliebige Abkantungen aufweisen. So ist es für die Qualität des Messsignals unerheblich, ob die der Sensorspule zugewandte schmale Seite des Messobjekts plan, abgerundet oder ein anderes Profil aufweist.

Dabei muss lediglich sichergestellt sein, dass der Sensor zur Bewegungsrichtung des Messobjekts ausgerichtet ist, was jedoch bei Messobjekten, deren Bewegungsrichtung prinzipiell bekannt ist, beispielsweise bei einem Verdichterrade eines Turboladers, kein Problem darstellt. Der Sensor könnte dann so gefertigt werden, dass die Spulenausrichtung entweder gekennzeichnet ist und der Sensor somit entsprechend justiert werden kann, oder dass durch eine mechanische Arretierhilfe wie zum Beispiel eine Nase oder ein Schlitz in einer der Sensorseiten oder durch vergleichbare Maßnahmen lediglich eine Befestigung In einer definierten Position möglich ist.

In vorteilhafter Weise wird der Wirbelstromsensor mit einem Wechselstrom beaufschlagt, wobei vorzugsweise ein sinusförmiger Wechselstrom zum Einsatz kommt. Allerdings sind auch andere Signalformen mit beispielsweise einem rechteckigen oder sägezahnförmigen Verlauf denkbar. Durch den Einsatz eines sinusförmigen Wechselstroms vereinfacht sich jedoch die Auswertung weiter.

Eine Auswerteschaltung erfasst die Impedanz der Sensorspule und/oder die durch ein Messobjekt hervorgerufene Änderung der Impedanz der Sensorspule und verfolgt die zeitliche Änderung der Impedanz. Dazu sind alle aus der Praxis bekannten Verfahren anwendbar. Aus dem zeitlichen Verlauf der Impedanz kann in einfacher Weise auf die Bewegung des Messobjekts und/oder die Bewegungsgeschwindigkeit des Messobjekts gegenüber der Sensorspule oder umgekehrt geschlossen werden. Dabei ist die Auswerteschaltung dann besonders einfach aufgebaut, wenn die Auswerteschaltung ein Schwellwertschalter, beispielsweise ein Schmitt-Trigger, umfasst. Durch den einfachen zeitlichen Verlauf der Impedanz kann damit bereits ein gutes Messergebnis erreicht werden.

In vorteilhafter Weise wird das Messsignal direkt oder das durch Verstärker, Entzerrer oder andere Schaltungen aufbereitete Messsignal einer digitalen Auswerteschaltung zugeführt. Diese Schaltung umfasst vorzugsweise einen digitalen Rechner in Form eines Mikrocontrollers, eines digitalen Signalprozessors oder ähnlichen.

Beim Einsatz eines derartigen Wirbelstromsensors lassen sich so zuverlässig die Bewegung, also das Vorhandensein eines Messobjekts, und die Bewegungsgeschwindigkeit des Messobjekts bestimmen. Werden zwei oder mehrere zueinander beabstandeten Sensorspulen eingesetzt, so lässt sich durch den erfindungsgemäßen Wirbelstromsensor zusätzlich die Richtung der Bewegung bestimmen.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 9 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

In der Zeichnung zeigen
- Fig. 1: eine prinzipielle Darstellung des aus der Praxis bekannten Wirbelstrom- sensor,
- Fig. 2: eine schematische Darstellung des Verlaufs des Messsignals bei dem Einsatz eines Wirbelstromsensors gemäß Fig. 1,
- Fig. 3: eine prinzipielle Darstellung eines Ausführungsbeispiels des erfindungs- gemäßen Wirbelstromsensors,
- Fig. 4: den zeitlichen Verlauf des Messsignals des Wirbelstromsensors gemäß Ausführungsbeispiel aus Fig. 3 und
- Fig. 5: eine Ausgestaltung des erfindungsgemäßen Wirbelstromssensors mit einer rechteckigen Grundfläche.

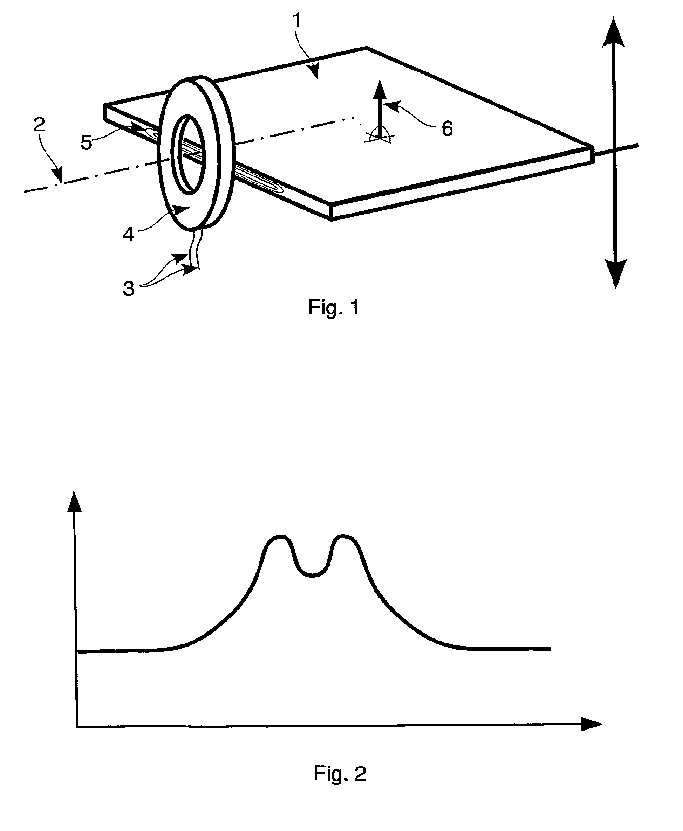

Fig. 1 zeigt eine schematische Darstellung eines aus der Praxis bekannten Wirbelstromsensors. Ein Messobjekt 1 bewegt sich senkrecht zur Spulenachse 2 einer über die Anschlüsse 3 mit einem Wechselstrom beaufschlagten Sensorspule 4. Durch die Sensorspule 4 werden damit elektromagnetische Felder erzeugt, die in dem Messobjekt 1 Wirbelströme 5 erzeugen.

Da sich Wirbelströme 5 maßgeblich in der Oberfläche eines Objektes 1 ausbilden, ist anhand Fig. 1 deutlich zu erkennen, dass eine Impedanzerhöhung durch diese Wirbelströme nur in sehr eingeschränktem Maße möglich ist.

In Fig. 2 ist der Verlauf des Messsignals - also der Impedanz - über der Zeit zu entnehmen. Dabei ist davon ausgegangen worden, dass sich das Messobjekt 1 gleichförmig an der Sensorspule 4 vorbeibewegt. Besonders deutlich ist dabei die Absenkung und die dadurch hervorgerufene Höckerbildung zu erkennen. Die Absenkung kann dabei noch größer ausfallen, wenn das Messobjekt noch schmaler ausgebildet ist oder in Folge von Oxidation, Verschmutzung oder allgemein schlechter Leitfähigkeit des Messobjekts 1 der den Wirbelströmen entgegengesetzte ohmsche Widerstand groß ist.

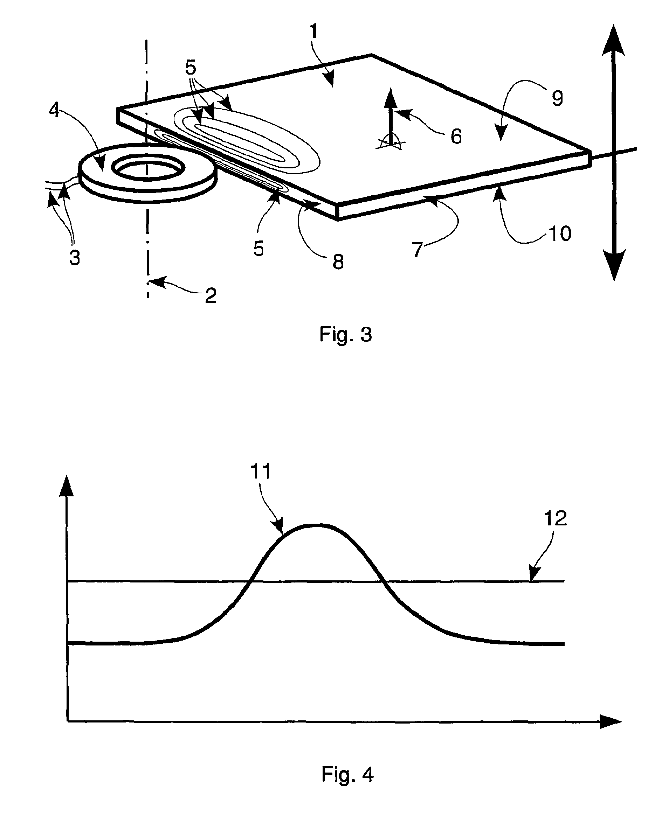

Fig. 3 zeigt einen erfindungsgemäßen Wirbelstromsensor, bei dem die Höckerbildung vermieden ist. Dabei ist die Sensorspule 4 derart angeordnet, dass die Spulenachse 2 im Wesentlichen parallel zur Flächennormalen 6 des flächigen Messobjekts 1 orientiert ist. Das Messobjekt 1 wird parallel zur Spulenachse 2 an der Sensorspule 4 vorbeibewegt. Dabei sei besonders darauf hingewiesen, dass in Fig. 3 lediglich der Einfachheit wegen als ein quaderförmiges Messobjekt 1 dargestellt ist, das Messobjekt 4 aber auch komplexer ausgestaltet sein kann. So ist es unerheblich, ob das Messobjekt 4 beispielsweise bei einer Turboladerschaufel an den von dem Wirbelstromsensor abgewandten schmalen Seiten 7 abgebogen ist. Ebenso kann die der Sensorspule 4 zugewandte Seite 8 relativ beliebig geformt sein. Neben dem hier dargestellten rechteckigen Profil wäre beispielsweise eine abgerundete Kante denkbar.

Es bilden sich nicht ausschließlich in der der Sensorspule 4 zugewandten Seite 8 Wirbelströme aus, vielmehr können in Folge der Streufelder auch Wirbelströme in den Flächen 9 und 10 induziert werden, wodurch sich die durch das Messobjekt 1 hervorgerufene Erhöhung der Impedanz verstärkt.

In Fig. 4 ist der zeitliche Verlauf 11 des Messsignals bzw. der Impedanz dargestellt. Im Gegensatz zu Fig. 2 weist dieser Signalverlauf 11 jedoch keine Absenkung auf. Dadurch kann durch einfaches Einführen eines Schwellwerts 12 detektiert werden, ob das Messobjekt sich im Bereich des Wirbelstromsensors befindet. Beispielsweise Detektion eines Verdichterrades eines Turboladers wiederholt sich dieser Verlauf. Bei Vorliegen einer gleichförmigen Bewegung entsteht dadurch ein periodischer Signalverlauf, aus dem die Drehgeschwindigkeit ermittelt werden kann. Beschleunigte bzw. verzögerte Drehbewegungen äußern sich in einer abnehmenden bzw. zunehmenden Periodendauer.

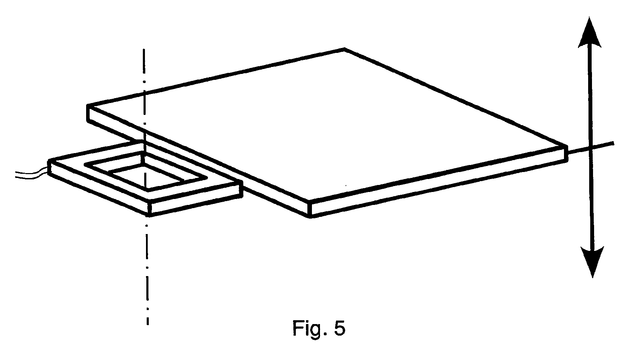

Fig. 5 zeigt eine alternative Ausgestaltung der Sensorspule 4 mit einem quadratischen Querschnitt. Dabei ist deutlich zu erkennen, dass der Abstand der einzelnen Punkte der Spule durch diese spezielle Ausgestaltung geringer ist.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf das Ausführungsbeispiel einschränkt.

## Patentansprüche

1. Anordnung eines mindestens eine Sensorspule (4) umfassenden, berührungslos arbeitenden Wirbelstromsensors und eines im Wesentlichen flächigen, eine Kante aufweisenden Messobjekts (1),
wobei die Sensorspule (4) und das Messobjekt (1) derart zueinander positioniert sind, dass die Spulenachse (2) im Wesentlichen parallel zur Flächennormalen (6) des Messobjekts (1) liegt und zur Detektion des Messobjekts (1) die Sensorspule (4) an der Kante des Messobjekts (1) oder umgekehrt derart vorbeigeführt wird, dass die Sensorspule (4) beim Passieren derart ausgerichtet ist, dass die Spulenachse (2) im Wesentlichen parallel zur Flächennormalen des Messobjekts (1) orientiert ist, so dass in dem Messobjekt (1) lediglich in Folge des Streufeldes der Sensorspule (4) Wirbelströme induziert werden.

2. Anordnung nach Anspruch 1, wobei das Messobjekt (1) schmal ausgebildet und die schmale Seite des Messobjekts (1) beim Passieren der Sensorspule (4) im Wesentlichen dem Sensor zugewandt ist.

3. Anordnung nach Anspruch 1 oder 2, wobei die Wicklungen der Sensorspule (4) eine im Wesentlichen rechteckige, quadratische, kreisförmige, ovale, hexagonale oder eine andere mehreckige Fläche aufspannen.

4. Anordnung nach einem der Ansprüche 1 bis 3, wobei die Impedanz und/oder die Änderung der Impedanz der Sensorspule (4) messbar ist, wobei der zeitliche Verlauf der Impedanz der Sensorspule (4) erfassbar ist.

5. Anordnung nach Anspruch 4, wobei die Messwerte aus der Messung der Impedanz bzw. der Änderung der Impedanz der Sensorspule (4) einer Auswerteschaltung zuführbar sind, wobei die Auswerteschaltung einen Schwellwertschalter umfassen kann.

6. Anordnung nach einem der Ansprüche 1 bis 5, wobei die Sensorspule (4) an eine vorzugsweise adaptierbare Haltevorrichtung angebracht ist.

7. Verfahren zur Detektion schmaler flächiger Messobjekte mittels eines Wirbelstromsensors, unter Anwendung einer Anordnung nach einem der Ansprüche 1 bis 6, wobei die Sensorspule (4) gegenüber dem Messobjekt (1) derart angeordnet und an der Kante des Messobjekts (1) vorbei bewegt wird, oder umgekehrt, so dass beim Passieren nur einmal ein Wirbelstrom im Messobjekt (1) auftreten kann.

8. Verfahren nach Anspruch 7, wobei die Sensorspule (4) durch einen Wechselstrom, vorzugsweise einen im Wesentlichen sinusförmigen Wechselstrom, durchflossen wird.

9. Verfahren nach Anspruch 7 oder 8, wobei die Impedanz der Sensorspule (4) und/oder die durch das Messobjekt (1) hervorgerufene Änderung der Impedanz der Sensorspule (4) gemessen wird.

10. Verfahren nach einem der Ansprüche 7 bis 9, wobei aus der Impedanz bzw. der Änderung der Impedanz der Sensorspule (4) der zeitliche Verlauf der Impedanz bestimmt wird, wobei aus dem zeitlichen Verlauf der Impedanz auf die Bewegung des Messobjekts (1) und/oder die Bewegungsgeschwindigkeit des Messobjekts (1) gegenüber der Sensorspule (4) oder umgekehrt geschlossen werden kann.

11. Verfahren nach einem der Ansprüche 7 bis 10, wobei durch Verwendung von zwei oder mehr zueinander beabstandeten Sensorspulen (4) die Richtung der Bewegung bestimmt wird.

## Claims

1. An arrangement of a non-contact eddy current sensor, comprising at least one sensor coil (4), and a substantially two-dimensional test object (1) having an edge, wherein the sensor coil (4) and the test object (1) are positioned relative to one another in such a way that the coil axis (2) lies substantially parallel to the surface normal (6) of the test object (1) and for detection of the test object (1) the sensor coil (4) is moved past the edge of the test object (1) or vice versa such that the sensor coil (4), as it moves past, is aligned so that the coil axis (2) is oriented substantially parallel to the surface normal of the test object (1), so that only eddy currents resulting from the stray field of the sensor coil (4) are induced in the test object (1).

2. An arrangement according to claim 1, wherein the test object (1) is of narrow construction and the narrow side of the test object (1) faces substantially towards the sensor as the sensor coil (4) passes.

3. An arrangement according to claim 1 or 2, wherein the windings of the sensor coil (4) span a substantially rectangular, substantially square, substantially circular, substantially oval, substantially hexagonal or other substantially polygonal area.

4. An arrangement according to any one of claims 1 to 3, wherein the impedance and/or the change in the impedance of the sensor coil (4) is measurable, wherein the variation with time of the impedance of the sensor coil (4) is detectable.

5. An arrangement according to claim 4, wherein the measured values from the measurement of the impedance or the change in the impedance of the sensor coil (4) can be supplied to an evaluation circuit, wherein the evaluation circuit can comprise a threshold switch.

6. An arrangement according to any one of claims 1 to 5, wherein the sensor coil (4) is mounted on a preferably adaptable holding device.

7. A method for detecting narrow, two-dimensional test objects by means of an eddy current sensor, using an arrangement according to any one of claims 1 to 6, wherein the sensor coil (4) is so arranged opposite the test object (1) and is moved past the edge of the test object (1), or vice versa, that during just one passage an eddy current can occur in the test object (1).

8. A method according to claim 7, wherein an alternating current, preferably a substantially sinusoidal alternating current, flows through the sensor coil (4).

9. A method according to claim 7 or 8, wherein the impedance of the sensor coil (4) and/or the change in the impedance of the sensor coil (4) caused by the test object (1) is measured.

10. A method according to any one of claims 7 to 9, wherein from the impedance or the change in the impedance of the sensor coil (4) the variation with time of the impedance is determined, wherein the movement of the test object (1) and/or the speed of movement of the test object (1) with respect to the sensor coil (4) or vice versa can be deduced from the variation with time of the impedance.

11. A method according to any one of claims 7 to 10, wherein the direction of the movement is determined by using two or more spaced sensor coils (4).

## Revendications

1. Agencement d'un capteur à courants de Foucault comportant au moins une bobine (4) et travaillant sans contact, et d'un objet à mesurer (1) sensiblement plat, comportant une aréte,
dans lequel la bobine (4) du capteur et l'objet à mesurer (1) sont positionnés l'un par rapport à l'autre de telle sorte que l'axe (2) de la bobine est sensiblement parallèle à la normale (6) de la surface de l'objet à mesurer (1), et pour détecter l'objet à mesurer (1), la bobine (4) du capteur est déplacée le long de l'arête de l'objet à mesurer (1) ou inversement, de telle sorte que la bobine (4) du capteur au moment du passage est orientée de telle sorte que l'axe (2) de la bobine est orienté sensiblement parallèlement à la normale de la surface de l'objet à mesurer (1), de telle sorte que, uniquement par suite du champ de diffusion de la bobine (4) du capteur, des courants de Foucault sont induits dans l'objet à mesurer (1).

2. Agencement selon la revendication 1, dans lequel l'objet à mesurer (1) est étroit et le côté étroit de l'objet à mesurer (1) est orienté sensiblement vers le capteur lors du passage de la bobine (4) du capteur.

3. Agencement selon la revendication 1 ou 2, dans lequel les enroulements de la bobine (4) du capteur déploient une surface sensiblement rectangulaire, carrée, circulaire, ovale, hexagonale ou une autre surface polygonale.

4. Agencement selon l'une quelconque des revendications 1 à 3, dans lequel l'impédance et/ou la variation de l'impédance de la bobine (4) du capteur peut être mesurée, l'évolution de l'impédance de la bobine (4) en fonction du temps pouvant être détectée.

5. Agencement selon la revendication 4, dans lequel les valeurs de mesure issues de la mesure de l'impédance ou de la variation de l'impédance de la bobine (4) du capteur peuvent être transmises vers un circuit d'analyse, ledit circuit d'analyse pouvant être muni d'un commutateur à valeur seuil.

6. Agencement selon l'une quelconque des revendications 1 à 5, dans lequel la bobine (4) du capteur est montée sur un dispositif de support, de préférence adaptable.

7. Procédé pour la détection d'objets à mesurer plats étroits au moyen d'un capteur à courants de Foucault, moyennant l'utilisation d'un agencement selon l'une quelconque des revendications 1 à 6, dans lequel la bobine (4) du capteur est disposée par rapport à l'objet à mesurer (1) et est déplacée le long de l'arête de l'objet à mesurer (1), ou inversement, de telle sorte qu'au moment du passage un courant de Foucault ne peut se produire qu'une seule fois dans l'objet à mesurer (1).

8. Procédé selon la revendication 7, dans lequel la bobine (4) du capteur est traversée par un courant alternatif, de préférence un courant alternatif sensiblement de forme sinusoïdale.

9. Procédé selon la revendication 7 ou 8, dans lequel sont mesurées l'impédance de la bobine (4) du capteur et/ou la variation de l'impédance de la bobine (4) du capteur, générée par l'objet à mesurer (1).

10. Procédé selon l'une quelconque des revendications 7 à 9, dans lequel l'évolution d de l'impédance en fonction du temps est déterminée à partir de l'impédance et/ou de la variation de l'impédance de la bobine (4) du capteur, sachant qu'à partir de l'évolution de l'impédance en fonction du temps, il est possible de déduire le déplacement de l'objet à mesurer (1) et/ou la vitesse de déplacement de l'objet à mesurer (1) par rapport à la bobine (4) du capteur, ou inversement.

11. Procédé selon l'une quelconque des revendications 7 à 10, dans lequel la direction du déplacement est déterminée moyennant l'utilisation de deux ou plus de bobines (4) du capteur, situées à distance les unes des autres.
